# EUROPEAN PATENT SPECIFICATION

(11) **EP 3 797 389 B1**
(45) Date of publication and mention of the grant of the patent: **09.10.2024**
(21) Application number: 19733157.2
(22) Date of filing: 21.05.2019
(51) Int. Cl.: G06Q 10/0639

(54) **METHOD TO ASSIST AN OPERATOR IN PERFORMING INTERVENTIONS ON AN PACKAGING MACHINE**
VERFAHREN ZUR UNTERSTÜTZUNG EINES BEDIENERS BEI EINGRIFFEN AN EINER VERPACKUNGSMASCHINE
PROCÉDÉ POUR ASSISTER UN OPÉRATEUR À EFFECTUER DES INTERVENTIONS SUR UNE MACHINE DE CONDITIONNEMENT

(30) Priority: 21.05.2018 IT 201800005543; 09.08.2018 IT 201800007987
(43) Date of publication of application: 31.03.2021
(73) Proprietor: I.M.A. Industria Macchine Automatiche S.p.A, 40064 Ozzano dell'Emila (IT)
(72) Inventor: TAMPIERI, Pierluigi, 40064 OZZANO DELL'EMILIA (IT); ALESSANDRI, Alessandro, 40064 OZZANO DELL'EMILIA (IT)
(74) Representative: Petraz, Gilberto Luigi
(86) International application number: PCT/IT2019/050114
(87) International publication number: WO 2019/224857

(56) References cited:
- EP-A1- 2 636 536
- DE-A1- 102012 217 570
- DE-A1- 102015 116 305
- US-A1- 2016 019 212
- US-A1- 2016 307 459

## Description

### FIELD OF THE INVENTION

The present invention concerns a method to assist the operator in performing interventions on an operating machine, for example interventions to carry out adjustments, settings or maintenance on the machine.

In particular, the method according to the present invention can be applied to automatic packaging machines, such as for example blister packaging machines.

The present invention also concerns an apparatus to perform the method, comprising an operating machine able to automatically perform a plurality of operations on a product to be packaged, and a portable electronic device for the operator.

### BACKGROUND OF THE INVENTION

The automatic machines known in the state of the art are very complex machines comprising a plurality of moving members and mechanisms, suitably coordinated with respect to each other and driven by a plurality of actuators.

Generally, automatic machines are highly automated machines able to perform a plurality of operations on the objects to be handled in different work stations.

In the case of an automatic packaging machine, for example a so-called "blister packaging machine" which forms blisters for discrete products such as tablets, pills or capsules, a thermoforming station, a filling station, a sealing station and a station to trim the blisters are typically provided.

The thermoforming station typically works a continuous strip of thermoformable material on which the cavities intended to contain the products are formed. The filling station fills the cavities with the discrete products, while the sealing station couples a film of heat-sealable material to the continuous strip and seals it thereon. Finally, the trimming station separates the blisters, separating them from the continuous strip.

The work stations present on the different types of automatic machines naturally vary as a function of the type of product to be packaged and as a function of the type of package in which the product has to be introduced. For example, if a liquid product or a loose powder product has to be packaged, respectively inside bottles or sachets, the work stations are functionally and structurally different from those previously described with reference to the blister packaging machine.

In any case, for all types of automatic packaging machines it is necessary that a specialized operator intervenes frequently on the machine, for example to adjust the functioning operating parameters, to perform ordinary or extraordinary maintenance operations, or to set the machine when the type of packaging or product changes.

All these operations generally require that one or more members or mechanisms of the machine itself be replaced.

For example, in the event of maintenance work, it may be necessary to replace a worn or malfunctioning mechanical member.

Furthermore, it is necessary to replace different members or mechanisms of the machine when the type of production changes. For example, if the machine has finished producing batches of blisters in which the discrete products are disposed according to a 2x5 matrix configuration (on two rows and five columns), and has to start producing batches of blisters in which the discrete products are disposed according to a 3x6 matrix configuration (on three rows and six columns), it is evident that a number of parts of the automatic machine that interact with the strip that precedes the blisters will have to be replaced. In other words, the so-called "format" components will have to be replaced, that is, all those components that have a shape and sizes univocally suited to work a certain type of package.

As the person of skill in the field of industrial automation knows well, one disadvantage of the automatic machines known in the state of the art is that the above interventions are often long and complex.

In fact, although these interventions are generally performed by a suitably trained specialized operator, the interventions imply a sequence of operations that makes them laborious and entails a high risk of making mistakes.

Below is a description of a possible sequence of operations that the specialized operator usually performs to perform a "format change" on the automatic machine.

Initially, the operator approaches a display associated with the automatic machine, which acts as an interface between the user and the control system that commands the machine, and introduces the data relating to the format change to be performed. In other words, he selects the "format change" operation and also introduces the new format desired.

The display then shows the information relating to the sequence of operations to be performed in order to carry out the selected format change. The information can be of a textual, sound (audio) or visual (images) type. It should be noted that the information generally contains both the indications of the format components that have to be replaced (which components, in which sequence, and which further components each of them has to be replaced with), and also information relating to the mounting and adjustment of the further components. With regards to the information relating to the components to be removed, and to the new components to be installed, the display typically shows the indication of a code, for example alphanumeric, which is univocally associated with each component.

After the operator has memorized the information provided on the display, he goes to the store to remove the further components relating to the new selected format that have to be installed on the automatic machine and returns to the machine to proceed with the replacement and adjustment operations according to the information received previously.

It should be noted that, in some cases, before proceeding with the mounting on the machine it is provided to pre-assemble groups or units comprised in the format components in dedicated work benches, which can also be distanced from the machine.

One disadvantage of the method described above to make a format change according to what occurs in the state of the art is that there is a high probability that the operator will make mistakes. For example, the operator could make mistakes in removing the further components related to the new selected format, or in the pre-assembly of groups or units before mounting them on the machine, or also during the adjustment of the components that have been mounted.

In fact, many of these operations are performed at a certain distance from the automatic machine, and therefore also from the display on which the information for the operator can be displayed, and also at a later time. For example, the store is generally located in another zone of the warehouse, or even in another building.

It is clear that the greater the amount of information that the operator has to remember and the amount of time between the display of the information and its implementation, the greater the risk that the operator will forget it or remember it in a confused and vague manner.

This is a very important disadvantage because the operator can take a long time both if he has to then correct possible errors committed, and also if he has to return many times to consult the information shown on the display. For example, if the operator removes an incorrect component from the store, and realizes this only once he has returned to the automatic machine, he will have to return to the store again to remove the correct component. Also, if the operator commits a mistake in the assembly sequence of the components or the sequence of adjustment operations to set the mounted components, he will have to disassemble and reassemble them, repeating the adjustment operations according to the sequence provided.

A further disadvantage, directly linked to the previous one, is the fact that possible errors, in particular not detected by the operator during format change operations, can compromise the correct functioning of the automatic machine. Consequently, it will be necessary to stop the machine again to detect the problem and solve it, which reflects negatively on the productivity of the machine itself.

A further disadvantage of the method described above is that it is expensive, both due to the cost of labor required for the interventions of specialized technicians, and also due to the costs related to the time during which it is necessary to keep the machine not functioning.

There is therefore the need to perfect a method to guide the operator during the interventions that have to be performed on the automatic machine, and to provide an automatic machine, which overcome at least one of the disadvantages of the state of the art.

In other fields of the state of the art, different from that of automatic packaging machines, the patent documents US-A1-2016/307459, US-A1-2016/019212 and WO-A1-2012/142250 describe methods and systems to assist an operator in the execution of some operations, also of a technical nature. In particular, US-A1-2016/307459 concerns a method to interactively train an operator in the field of handling food products, US-A1-2016/019212 describes a method to assist an operator during a technical intervention on aircraft equipment and WO-A1-2012/142250 describes a method to assist an operator during a generic technical intervention on a device.

However, these prior patent documents are not able to overcome the disadvantages described above, relating to the peculiarities of the interventions that the operator has to perform on the automatic machines in question. Consequently, due to the complexity of the interventions, which need to be performed by highly specialized technical personnel, the need to perfect a method to guide the operator during interventions on the machine remains.

One purpose of the present invention is to perfect a method to guide the operator when he has to intervene on an automatic machine, for example to perform adjustment, setting or maintenance operations, such as for example mounting replacement components, in particular format components, or to replace similar worn, defective or malfunctioning components.

Another purpose of the present invention is to perfect a method which allows to reduce the intervention times of the operator, and therefore limit the downtimes of the machine, to the benefit of its productivity.

Another purpose of the present invention is to perfect a method which allows to minimize, or even eliminate, the risk that the operator will make mistakes during the interventions performed on the automatic machine.

Another purpose of the present invention is to perfect a method which allows to reduce the costs of the interventions of the operators on the automatic machine.

Another purpose of the present invention is to provide an automatic machine, and a portable electronic device for the operator that interacts with the automatic machine or with some of its parts, which allow to execute the method according to the present invention.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, embodiments of the present invention concern a method to assist an operator in performing an intervention on a packaging machine able to automatically perform a plurality of operations on a product to be packaged.

In one embodiment, the machine is a "blister packaging machine", to form blisters filled with discrete items, such as tablets, capsules or pills.

It is understood that the method according to the present invention can be advantageously implemented on any packaging machine able to automatically perform one or more workings on a product, even on machines different to the blister packaging machines mentioned above, without departing from the field of protection of the present invention.

According to a characteristic aspect of the present invention, the method provides to make available to the operator a portable electronic device and, at the start of a selected intervention on the packaging machine, the method provides the interaction of the electronic device with the packaging machine to render visually available to the operator operative information received from the packaging machine and specific to assist the operator in performing the selected intervention to be performed. According to embodiments described here, the portable electronic device comprises a processor configured to store and process data correlated to the operative information and also comprising, or is operatively associated with, electromagnetic acquisition means.

According to embodiments described here, the electromagnetic acquisition means are configured to detect images or videos of the packaging machine, or of some specific components thereof, or of codes univocally associated with them.

According to a characteristic aspect of the present invention, the method provides a visual reproduction step, by means of the portable electronic device, of the operative information, step-by-step, so that the operative information relating to a specific step of the intervention is made available to the operator by means of the portable electronic device before or during the execution of this specific step; during and/or after each specific operating step, a control step is performed wherein it is provided to perform a comparison between a sub-group of "expected" control information, comprised between the data stored in the processor, with a corresponding sub-group of actual control information detected in real time by the electromagnetic acquisition means during and/or after the performance of the specific operating step to verify, by means of the processor, whether in the specific operating step the sub-group of actual control information is compatible with the sub-group of "expected" control information. According to some embodiments, if the verification is positive, the method recognizes that the specific operating step has been performed correctly and enables the reproduction, by means of the portable electronic device, of operative information relating to a subsequent operating step, while if the verification is negative the method recognizes that the specific operating step has not been performed correctly and selectively inhibits the step of reproducing the operative information relating to a subsequent operating step.

The intervention to be performed on the machine is an intervention to replace format components of the machine which have to be replaced when the product to be packaged changes, or an intervention to adjust the functioning parameters of some parts of the machine (for example the format components themselves), or a maintenance intervention to replace worn or defective parts comprised in the machine.

The method according to the present invention comprises:
- a step of graphic representation, by means of the portable electronic device, of the operative information to locate a replacement component identified by a first identifying characteristic univocally associated with the replacement component, the latter being located in a separate location from the packaging machine, such as for example a store for components;
- a control step wherein it is provided to perform a comparison between the first identifying characteristic detected in real time by the electromagnetic acquisition means and a first "expected" characteristic comprised in the data stored in the processor; and
- a further step of graphic representation, by means of the portable electronic device, of the operative information to guide the operator during the installation of the replacement component on the packaging machine.

According to the invention the further step of graphic representation, by means of the portable electronic device, of the operative information to guide the operator, is made available to the operator only if the control step detects a correspondence between the first identifying characteristic and the first "expected" characteristic, therefore enabling the reproduction, by means of the portable electronic device, of operative information relating to the installation of the replacement component on the packaging machine, while - in the absence of any correspondence - the method inhibits the step of reproducing the operative information relating to the installation of the replacement component on the packaging machine.

According to some embodiments of the method described here, the actual information of the first identifying characteristic detected in real time is formed by a code, in particular comprising a sequence of alphanumeric characters, which are univocally associated with specific components of the packaging machine and which are extracted by the electromagnetic acquisition means through a recognition step using the OCR (Optical Character Recognition) technique; in the same way the information stored in the processor, for example relating to the first "expected" characteristic, are the codes, for example alphanumeric, univocally associated with the different components of the packaging machine.

In one embodiment, the recognition step is performed by the processor.

In an alternative embodiment, the recognition step is performed by a further data processing unit integrated in the electromagnetic acquisition means and configured to communicate the codes extrapolated during the recognition step to the processor to perform the control step.

According to some embodiments of the method described here, the information stored in the processor has been transmitted to it previously by a programmable control unit of the packaging machine and the actual information detected in real time are images or videos related to the packaging machine or to some of its specific components, which have been acquired by the electromagnetic acquisition means.

In some embodiments, in the control step it is provided to establish that a specific operating step has been performed correctly if, during the performance of the comparison between the "expected" control information stored in the processor and the actual control information detected, these two sets of information coincide, whereas vice-versa it is provided to establish that the specific operating step has not been performed correctly if, during the performance of the comparison, the "expected" control information does not coincide with the corresponding actual control information detected.

One advantage of the method according to the present invention is that it makes available an aid system for the operator in performing an intervention on the machine, for example to perform interventions such as those listed above.

Due to the fact that the method provides to make gradually available to the operator information relating to the operating steps to be performed in order to complete the intervention, the method advantageously allows to guide the operator step by step during the performance of the intervention.

This makes the actions of the operator much more effective, who is greatly helped by not having to memorize a large amount of information relating to the intervention to be performed, as instead happens in the solutions known in the state of the art. In fact, the operator can advantageously consult the information relating to the different operating steps included in the intervention to be performed exactly when needed, that is, for example immediately before each step.

Another advantage of the method according to the present invention is that it minimizes the risk of errors made by the operator during the intervention. In fact, the fact that the information relating to the following operating step is made available only after verifying that the immediately preceding operating step has been performed correctly, significantly reduces, or even eliminates, the risk of making errors.

This allows, advantageously, to avoid that possible errors during the performance of one or more of the operating steps described above emerge only after they have been committed, when long and laborious operations would be necessary to remedy them.

According to another aspect of the present invention, an augmented reality optical assembly is provided to assist an operator in performing an intervention on a packaging machine able to automatically perform a plurality of operations on a product to be packaged, wherein the assembly comprises a portable electronic device for the operator configured to implement augmented reality techniques and to interact, at the start of a selected intervention on the packaging machine, with the packaging machine itself in order to make visually available to the operator operative information received from the packaging machine and specific to assist the operator in performing the selected intervention to be performed, this operative information being made visually available in correlation with the real environment according to augmented reality techniques.

According to some embodiments, the portable electronic device comprises a processor configured to store and process data correlated to the operative information and also comprises, or is operatively associated with, electromagnetic acquisition means to implement the method to assist an operator in performing an intervention on a packaging machine according to the present invention.

According to a further aspect of the present invention, an apparatus is provided to perform the method to assist an operator according to the present invention, wherein the apparatus comprises a packaging machine comprising a plurality of components disposed in one or more work stations to perform respective workings on a product to be packaged, and a programmable control unit configured at least to drive the components and to command the functioning of the work stations, and a portable electronic device for the operator comprising a processor to store and process data, a communication module to communicate with the programmable control unit of the packaging machine to transmit/receive the data, electromagnetic acquisition means configured to detect at least images or codes of the components and reproduction means able to reproduce the data to make them visually available to the operator.

In one embodiment, the portable electronic device is configured as a tablet, or a smartphone (for example a phablet), or a notepad, or a laptop of small dimensions.

In another embodiment, alternative to the previous one, the portable electronic device is configured as a viewing device wearable by an operator and comprising a reproduction mean able to reproduce the data to make them visually available to the operator according to augmented reality techniques.

One advantage of the apparatus according to the present invention is that it is flexible, because the information always follows the operator, wherever he is, thanks to the fact that the electronic device that reproduces the operative information is portable and can, in one embodiment, be held by the operator, who can always keep it with him. For example, the operator can make use of the operative information even at a certain distance from the machine on which he has to intervene, or directly while he is performing a step of assembly/disassembly of a component on/from the machine, even if he were disposed in an uncomfortable or difficult position to reach.

According to other aspects of the present invention, a processor-readable medium and a processor program able to be stored in a processor-readable medium are made available, comprising instructions which, once performed by an apparatus according to the present invention, determine the performance of a method according to the present invention to assist an operator in performing an intervention on a packaging machine able to automatically perform a plurality of operations on a product to be packaged.

These and other aspects, characteristics and advantages of the present disclosure will be better understood with reference to the following description, drawings and attached claims. The drawings, which are integrated and form part of the present description, show some embodiments of the present invention, and together with the description, are intended to describe the principles of the disclosure.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic front elevation view of an apparatus comprising an embodiment of a packaging machine and a portable electronic device able to implement the method according to the present invention;
- fig. 1a is a variant embodiment of the portable electronic device comprised in the assembly of fig. 1, configured as a wearable viewing device;
- figs. 2-4 are schematic front elevation views, which show some examples of images that the operator can visualize through the device of fig. 1.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

The method according to the present invention is described with particular reference to the drawings, where an embodiment of a machine to package items is shown, indicated as a whole with the reference number 10.

The packaging machine 10, also called blister packaging machine, is configured to form blisters each containing a plurality of discrete items.

In a particular embodiment, the discrete items can be tablets, pills or capsules used for example in the pharmaceutical or homeopathic or cosmetic sector.

It is understood that the method according to the present invention can also advantageously be implemented in other embodiments of packaging machines, different from the blister packaging machine shown in the attached drawings.

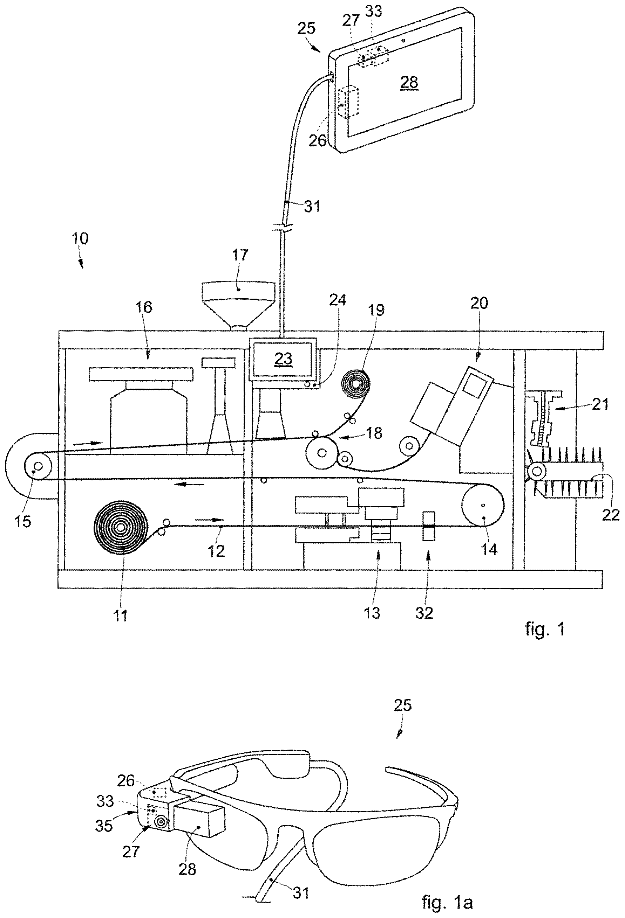

With reference to fig. 1, an apparatus consisting of the machine 10 and a portable electronic device, indicated with the reference number 25, can be seen.

The portable electronic device 25, advantageously mobile, can be selectively associated, in particular connected, more in particular physically connected, with the machine 10 and, subsequently, disconnected from the machine 10 and be moved to another zone or area, for example a store or suchlike, for the purposes of performing the method according to the present description, as better explained in the following description.

In the embodiment described here and shown in the drawings, the portable device can be a tablet which, during use, is configured to be used and held by the operator.

According to alternative embodiments, not shown, the portable device as above can be configured as a smartphone or as a portable computer.

In a variant embodiment, shown in fig. la, the portable electronic device 25 can be a viewing device 25 wearable by an operator. The wearable viewing device can be configured, for example, as a pair of augmented reality (AR) goggles 25, wearable by a user. It should be noted that the goggles 25 in fig. 1 are not shown in scale with respect to the machine 10, having been significantly enlarged for reasons of clarity.

According to alternative embodiments, not shown, said portable device can be configured as a bracelet or an earpiece.

The machine 10 comprises a plurality of components, disposed in different work stations, as described below.

A reel 11 of thermoformable material is disposed in the machine, from which a continuous strip 12 is unwound, which is the precursor of the blisters, subsequently formed in a molding unit 13. The latter comprises hot molding members configured to thermoform the continuous strip 12 so as to make the cavities that receive the items.

Downstream of the molding unit 13, a system 32 to feed the continuous strip 12 is provided, for example comprising one or more mechanical grippers mobile with alternating movement and configured to grip the continuous strip 12 and feed it stepwise.

The machine 10 comprises a first return roll 14 and a second return roll 15, on which the continuous strip 12 is wound. The return rolls 14, 15 allow to feed the continuous strip 12 in order to take it toward the subsequent work stations. The machine 10 also comprises a filling unit 16 configured to fill the cavities formed on the continuous strip 12 with as many items and provided with an introduction hopper 17.

A sealing unit 18 is provided downstream of the filling unit 16, to which a film of heat-sealable material is fed which is sealed onto the continuous strip 12 on the side faced by the opening of the cavities in order to seal them. In one embodiment, the film of heat-sealable material is unwound by a respective reel 19.

After passing through the sealing unit 18, the continuous strip 12 reaches a trimming unit 20, comprising cutting members configured to repeatedly trim the continuous strip 12 so as to form the individual blisters. The latter are then fed to a vertical store 21, in which the blisters are stacked and from which they are removed one at a time to be disposed on a conveyor belt 22 which carries them toward the exit of the machine 10.

The machine 10 comprises a user interface 23, for example configured as a touch-type display on which the operator can select the commands to control the functioning of the machine 10.

The machine 10 also comprises a programmable control unit 24 configured to command the functioning of the machine, on the basis of the commands introduced by the operator in the user interface 23.

In some embodiments, the first return roll 14 is an oscillating roll, the position of which can be modified to allow to compensate for the lengthening/shortening of the continuous strip 12 during the functioning. In fact, in some embodiments, the zone disposed upstream of the first return roll 14 (for example the molding unit 13) can operate according to a stepwise indexed functioning, while the zone downstream of the first return roll 14 (for example the filling 16 and sealing 18 units) can operate according to a continuous functioning. It is clear that in this case it is necessary for an element of the machine to be mobile according to a suitable trajectory and law of motion, in order to avoid malfunctions, for example due to excessive tension on the continuous strip 12, which can cause it to tear.

According to embodiments described here, the tablet 25 comprises a processor 26, of a type known in the state of the art, configured to store and process data, and a screen or display, for example touch-type, indicated with the reference number 28.

Furthermore, the electronic device 25 comprises, or is operatively associated with, electromagnetic acquisition means 27. In possible implementations, the electromagnetic acquisition means can be optical, optoelectronic or radio frequency. Possible examples are a camera, a video camera, or comparable image and/or video acquisition means. Alternatively, other examples can be a barcode reader, a QR-code (Quick Response code) reader, or an RFID (Radio Frequency Identification) or NFC (Near Field Communication) tag reader, or similar. Hereafter, with the number 27, we will refer by way of a non-restrictive example to means to acquire electromagnetic images of the optical type, for example in the form of a camera.

In one embodiment, the tablet 25 comprises a further data processing unit 33 operatively connected to the camera 27 to process the images acquired by the latter. In this embodiment, the tablet 25 therefore comprises both the processor 26, and also the further processing unit of the camera 27, which are configured to communicate with each other according to modes known in the state of art. In particular, according to a possible embodiment, the further processing unit 33 is incorporated or integrated in the camera 27.

In other embodiments, the camera 27 may not be integrated in the tablet 25, but external to the latter and operatively connected to it.

In some embodiments, the processor 26, or the further processing unit 33, are configured to implement an algorithm technology for extraction and optical recognition of information from images and/or a video stream, for example information or codes of an alphanumeric character. For example, the processor 26 or the further processing unit 33 are able to extract alphanumeric codes from the images acquired with OCR-type recognition techniques.

In some embodiments, the processor 26 can comprise a central processing unit, or CPU, an electronic memory, an electronic database and auxiliary circuits (or I/O) (not shown). For example, the CPU can be any form of computer processor used in the IT field. The memory can be connected to the CPU and can be any one of those commercially available, such as a random access memory (RAM), a read-only memory (ROM), hard disk, mass memory, or any other form of digital storage, local or remote. Software and data instructions can for example be coded and stored in the memory to command the CPU. The auxiliary circuits can also be connected to the CPU to help the processor in a conventional manner. The auxiliary circuits can include for example at least one of either: cache circuits, power supply circuits, clock circuits, input/output circuitry, subsystems, and suchlike. A program (or computer instructions) readable by the processor 26 can determine which tasks can be performed according to the method according to the present description. In some embodiments, the program is a software readable by the processor 26. The processor 26 can include a code to generate and store information and data introduced or generated during the course of the method according to the present description.

In one embodiment, the processor 26 comprises a general-purpose processor, of a type known in the state of the art and configured to perform the steps of the method described here, while the further processing unit 33 comprises a single-purpose type processor, configured only to perform code extraction from an image using OCR type recognition techniques. In this way, it is possible to lighten the computation load on the processor 26, which is programmed to implement the other functions described in the context of the present description, but which is relieved from performing the code extraction step using OCR techniques.

According to one embodiment, the processor 26 further comprises a communication module which allows the tablet 25 to communicate with the programmable control unit 24 to transmit/receive data.

In one embodiment, the camera 27 is of a type known in the state of the art and is configured to detect images or to make videos.

In one embodiment, the screen 28, of a type known in the state of the art, is able to project images or multimedia contents, and acts as a reproduction mean able to reproduce the data received from the processor 26 to make them available to the operator.

In one embodiment, the tablet 25 comprises a loudspeaker (not shown) integrated in the device and configured to reproduce sound contents, such as for example voice information of a voice guide.

According to embodiments provided here, the information that the tablet 25 makes available to the operator, that is, the data received from the processor 26, comprises visual contents, in particular images, a sequence of images, a video, a text or a combination thereof, sound content or multimedia content consisting of the combination of one or more of those listed above.

According to the variant embodiment shown in fig. 1a, in which the portable electronic device is configured as goggles 25 wearable by an operator, the goggles 25 comprise the processor 26 described above, configured to store and process data, and a projector 28.

The processor 26 can be comprised in a containing structure, or casing, 35, mounted, for example laterally, on the frame of the goggles 25. The projector 28 can also be comprised, mounted or supported, on said containing structure 35. Furthermore, the goggles 25 comprise, or are operatively associated with, said electromagnetic acquisition means 27, for example configured as the camera. In this possible embodiment, the camera 27 can also be comprised, incorporated or integrated with said containing structure 35. Furthermore, said further data processing unit 33 can also be comprised in said containing structure 35.

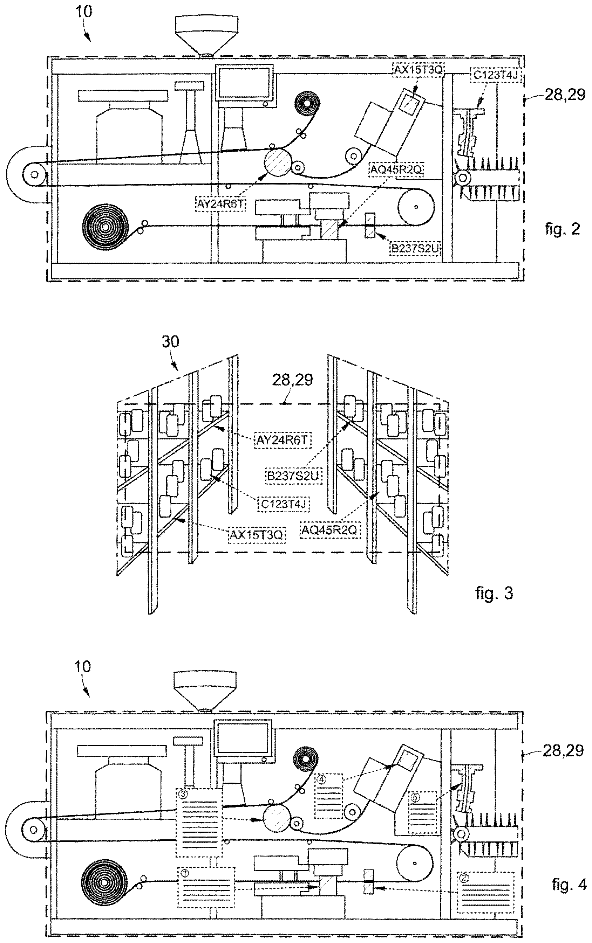

In one embodiment, the processor 26, the camera 27 (possibly together with the further data processing unit 33 of the camera itself) and the projector 28 are integrated in the goggles 25, being directly associated with the frame, as shown in fig. 1a. In other embodiments, the camera 27 may not be integrated, but outside the goggles 25 and operatively connected thereto. In figs. 2-4 the edges of the screen 28 of the tablet 25 are indicated with a line of dashes, on which virtual elements are visible, such as - by way of a non-restrictive example - arrows, alphanumeric codes and text information, superimposed on a background that reproduces a real context, which in one case is the machine 10 (figs. 2 and 4), and in another case a store 30 for the components (fig. 3), so that the information made available to the operator is as clear and comprehensible as possible.

Figs. 2-4 show, by way of example, still images extracted from a video, or tutorial, which the operator can display on the screen 28 of the tablet 25. To facilitate the operator, said virtual elements are displayed against the background of the real environment, in which the operator has to operate, be it the automatic blister packaging machine, or a store for components.

In the embodiment in which the portable electronic device is configured as the goggles 25 of fig. 1a, said line of dashes indicates a virtual screen 29, visible only to the operator wearing the goggles 25, on which the information to be made available to the operator in correlation with the operator, according to augmented reality techniques, is projected by the projector 28.

Possible embodiments of the method according to the present invention are now described, with reference to the attached drawings.

In an initial data transmission step, it is provided to connect the tablet 25 with the machine 10.

In one embodiment, the connection between the tablet 25 and the machine 10 can occur via a connection cable 31 (fig. 1), for example an Ethernet cable of the type known in the state of the art.

In another embodiment, not shown, the connection between the tablet 25 and the machine 10 can be a wireless connection, exploiting wireless communication protocols known in the state of the art.

According to some embodiments, in the initial data transmission step the processor 26 receives from the programmable control unit 24 of the machine 10 the data, that is, the operative information to be made available to the operator.

According to some embodiments, if the machine 10 allows to work n different blister formats, in this initial data transmission step, the programmable control unit 24 transmits to the processor 26 the information relating to the interventions that the operator has to perform on the machine 10 to make it able to work each of the n different formats. This information comprises, for example, information relating to the format components or to the units of the machine that have to be replaced, and information relating to the parts to be mounted instead of the format components or disassembled units, and also to the possible adjustment of operating parameters to be set during mounting so that the mounted parts function correctly.

In a particular embodiment, in the initial data transmission step it is provided to transfer from the programmable control unit of the packaging machine 10 to the processor 26 only the data correlated to the selected intervention to be performed, that is, for example, only relating to the particular format change to be performed, among all available format changes. In this case, the initial data transmission step is performed only after the operator has chosen the intervention that has to be performed on the packaging machine 10.

In some embodiments, if in order to change from one type of working to another of the machine 10 it was sufficient to modify the position or the operative settings of one or more components of the machine, without replacing any format component, in this initial data transmission step the information relating to the modifications to be made in order to change from one type of working to another is transferred.

In further embodiments, in the data transmission step, information is also transferred relating to the operating instructions to replace components of the machine 10 subject to wear that have to be replaced periodically, together with the corresponding instructions to mount them, to adjust and implement them.

According to one embodiment, in the initial data transmission step it is provided to also transfer to the processor 26 the information relating to the storage location of the various components involved in the format change or maintenance interventions on the machine.

In this embodiment, it is provided that in the initial data transmission step the tablet 25 is connected with the company management system, for example by means of a cable connection with one of the computers included therein, so that the information relating to the storage location of said machine components is transferred to the processor 26.

The data that are transmitted to the processor 26 in this initial step are stored inside it and available for subsequent processing.

The method provides a step of acquiring images by means of the camera 27 during which it is provided to detect images of components or units of the machine 10, or of codes univocally associated therewith, as will be described in greater detail below.

Subsequently, a data processing step is provided wherein it is provided to compare the codes associated with some components of the packaging machine 10 which have been extracted from the images acquired by the camera 27 during the recognition step using the OCR technique, with corresponding component codes which were stored previously in the processor itself during the initial data transmission step.

According to one embodiment, this code recognition step is implemented by the processor 26 of the tablet 25.

According to an alternative embodiment, this data processing step is performed by the further processing unit 33 integrated in the camera 27. In this case, the recognition of the codes using the OCR technique is performed by the further processing unit 33, which then communicates the extrapolated codes to the processor 26, which is configured to perform the other subsequent steps, described below.

Subsequently, a control step is provided wherein it is provided to verify if the operating step has been performed correctly. In one embodiment, the result of this verification is positive if the images/codes detected by the camera 27 coincide with the corresponding images/codes stored in the processor 26, while it is negative if the images/codes do not coincide.

In an example embodiment of the method according to the present invention, the operator selects a format change operation on the user interface 23, also selecting the new format of the blisters to be produced, from those available on the screen. For example, the operator selects 3x6 format blisters (items disposed on a matrix formed by three rows and six columns), instead of the 2x5 format blisters previously produced.

Initially, the operator connects the tablet 25 to the programmable control unit 24 to perform the initial data transmission step described above, during which, in this example, the information relating to the intervention to change format from 2x5 blisters to 3x6 blisters is downloaded onto the processor 26.

Subsequently, the operator takes the tablet 25 so that the method according to the present invention can assist him in performing the format change intervention that has been selected. The format change intervention can comprise different operating steps, which the operator has to perform according to a predetermined sequence, as described by way of example below.

With reference to fig. 2, this schematically shows what is visible to the operator on the screen 28 of the tablet 25 in a first operating step. That which is described below also applies to the embodiment of fig. 1a, with the only difference that in this case the attached drawings show what is visible to the operator on the virtual screen 29 of the goggles 25.

In this first operating step, the format components which have to be replaced or adjusted are highlighted on the screen 28. In fig. 2, these format components are highlighted with oblique cross-hatching.

During use, these components can be graphically identified on the screen 28, for example with a particular color, or by making them flash intermittently. The method according to the present invention thus allows to locate visually, in an immediate and effective manner, the format components on the machine which will have to be disassembled and replaced.

For example, this is the case of five components of the machine 10, in particular: the molds of the molding unit 13, the feed system 32, a roll comprised in the sealing unit 18, the cutter comprised in the trimming unit 20, and the vertical store 21.

It should be noted that the screen 28 can also display the codes univocally associated with the format components of the machine 10 listed above, or with the format components to be mounted to replace those currently on the machine, as in the case shown.

In one embodiment, the codes can be of the alphanumeric type, for example a "talking" code formed by a sequence of numbers and letters, for a total of seven characters, in the case shown.

In other embodiments, not shown, the codes associated with the components can be mono or bi-dimensional bar codes, for example QR-codes.

According to one embodiment, in this first step the operator detects, by means of the camera 27 integrated in the tablet 25, said code associated with one of the components to be disassembled which have been highlighted on the screen 28. As mentioned, the codes are extrapolated using the OCR technique starting from an image of the component acquired by means of the camera 27.

Subsequently, a first control step is provided, during which it is provided to verify whether the code detected by the camera 27 coincides with a corresponding "expected" code of the same format component, which was previously stored in the processor 26.

After this, if the result of the first control step is positive, in a second operating step the operator disassembles the components highlighted on the screen 28 from the machine 10.

In a third operating step, optionally comprised in the intervention to be performed, the operator goes to the component store 30 to remove the format components to be mounted on the machine 10.

On the screen 28 (fig. 3) it is possible to highlight, for example by means of arrows, the format components that have to be removed to be installed on the machine 10 instead of the format components that have been disassembled in the second operating step.

In this case, the method according to the present invention allows to locate the format components identified by the respective codes also in a space separate and distant from the machine 10, such as for example in the component store.

Alternatively, if the third operating step is not implemented, the operator already has the format components to be mounted on the machine, for example because they have been received from a store worker.

In some embodiments, a step is provided wherein the operator detects, by means of the camera 27 integrated with the tablet 25, the code associated with the further format component to be mounted. In this case too, the code is extrapolated using the OCR technique starting from an image of the further format component acquired by means of the camera 27.

A second control step is also provided, during which it is verified whether the code detected by the camera 27 coincides with a corresponding "expected" code of the further format component to be mounted, a code that was previously stored in the processor 26.

Subsequently, if the result of the second control step is positive, it is provided to make available to the operator the operative information relating to the mounting of the further format component on the packaging machine 10.

A fourth operating step is then provided, wherein the operator mounts the format components on the machine. This operating step provides a plurality of sub-steps, equal to the number of format components to be mounted, which in one embodiment have to be performed according to a predetermined sequence. In the example shown, five sub-steps are provided, as there are five format components to be mounted.

In the fourth operating step, text or graphic information is displayed on the screen 28, possibly accompanied by sound instructions of a guide voice, relating to the operating instructions to guide the operator while he performs the step or sub-step, that is, the instructions to mount and/or adjust the format components.

It should be noted that in fig. 4 the instructions are outlined in dashed rectangles, identified with sequential numbers from 1 to 5. This numbering reflects the predetermined sequence, so the operator has to first mount the component marked with the number "1", then the one marked with the number "2", and so on.

According to some embodiments, only the information relating to the instructions to mount and/or adjust one format component at a time is displayed on the screen 28. In other words, first only the instructions relating to the component marked with the number "1" appear, then - once it has been correctly mounted - those relating to the component marked with the number "2", and so on.

In this way, the operator is guided step by step to perform the subsequent sub-steps, in the order provided.

It should be noted that, in some embodiments, if some sub-steps provide pre-assembly operations of units or components at dedicated work benches, possibly disposed at a certain distance from the machine 10, the method advantageously allows to also make available on the screen 28 the instructions relating to these operations.

According to some embodiments, the adjustment instructions can comprise information relating to the relative distance between two components (for example between two rolls, or between mold and counter-mold, or between the opposite lateral guides that guide the continuous strip 12 during the feed), the tightening force with which a component has to be mounted, the pressure (and counter-pressure) that a component (for example a roll) has to exert on the continuous strip 12.

It should be noted that also in the example described above, the display of information relating to a certain step, or sub-step, on the screen 28 only occurs if the previous control step has returned a positive result of the verification of the correctness of the execution of the previous step or sub-step.

For example, the information relating to the third operating step is made available to the operator only after the camera 27 has detected that the five components highlighted on the screen 28 in the first operating step have been effectively disassembled from the machine 10.

Furthermore, the information relating to the fourth operating step is made available to the operator only after the camera 27 has detected that the codes univocally associated with the format components to be mounted on the machine are the correct ones. This allows to perform, before the fourth operating assembly step , a preliminary check on the fact that the format components to be mounted, for example removed from the component store 30, are the correct ones, and that other components, different from those indicated, have instead not been removed by mistake.

Finally, the information relating to the second, third, fourth and fifth sub-steps of the fourth operating step, relating to the mounting of corresponding format components, is made available to the operator only after the camera 27 has detected that the immediately previous sub-step was performed correctly. In other words, the operator can proceed with a subsequent sub-step, only after the camera 27 has detected that the previously mounted format component has been mounted correctly.

In one embodiment, the steps described above are performed in sequence to replace a determinate format component with the further format component, and only after verifying that the replacement has been performed correctly is it provided to repeat said steps in sequence to replace another format component.

Some embodiments can provide to perform various steps, passes and operations, as described here. These steps, passes and operations can be performed with instructions performed by the processor 26 which cause the performance of certain steps by a general-purpose or special-purpose processor. Alternatively, these steps, passes and operations can be performed by specific hardware components that contain hardware logic to perform the steps, or by any combination of components for programmed computers and customized hardware components.

Embodiments of the method according to the present description can be included in a computer program that can be stored in a computer-readable medium which contains the instructions which, once performed by the apparatus comprising the packaging machine and the portable electronic device 25 determine the performance of the method in question. In particular, elements of the method according to the present description can be provided as machine or processor-readable media to store the instructions that can be performed by the machine or processor. The machine-readable media can include, without being limited to, floppy disks, optical disks, CD-ROMs, and magneto-optical disks, ROMs, RAMs, EPROMs, EEPROMs, optical or magnetic cards, propagation means or other types of machine or processor-readable means suitable to store electronic information. For example, the method according to the present description can be downloaded as a computer program that can be transferred from a remote computer (for example a server) to a computer that makes a request (for example a client), by means of data signals made with wave carriers, or other propagation means, via a communication link (for example a modem or a network connection).

The scope of the present invention is defined in the appended claims.

## Claims

1. Method to assist an operator in performing a format-change intervention on a packaging machine (10) able to automatically perform a plurality of operations on a product to be packaged; in which intervention it is provided to replace format components of said packaging machine (10) that have to be replaced because they are univocally correlated to the product to be packaged, said method making available to the operator a portable electronic device (25), wherein, at the start of said format-change intervention on said packaging machine (10), the method provides the interaction of said portable electronic device (25) with a programmable control unit (24) which commands said packaging machine (10) in order to render visually available to the operator operative information received from said packaging machine (10) and specific to assist the operator in performing the format-change intervention to be performed, said portable electronic device (25) comprising a processor (26) configured to store and process data correlated to said operative information and comprising, or being operatively associated with, electromagnetic acquisition means (27); said method being **characterized by** comprising:
- selecting from a user interface (23) connected to said programmable control unit (24) the format of the product that said packaging machine (10) will have to package,
- connecting said portable electronic device (25) to said programmable control unit (24) via cable or wirelessly,
- performing an initial data transmission step during which the operative information relating to the format-change intervention to be performed is downloaded into said processor (26) of said portable electronic device (25),
- detecting, by means of said electromagnetic acquisition means (27), an image from which the code univocally associated with the format component to be disassembled is extrapolated,
- performing a first control step, during which it is provided to verify whether said code detected by said electromagnetic acquisition means (27) coincides with a corresponding "expected" code of said format component that has been previously stored in said processor (26);
- if the result of the first control step is positive, making available to the operator the operative information relating to the disassembly of the format component on said packaging machine (10),
- a step of locating, by means of said portable electronic device (25) that graphically represents said operative information, a replacement format component to be mounted that is identified by a first identifying characteristic univocally associated with said replacement format component, the latter being located in a component store (30) in a separate location from said packaging machine (10);
- detecting in real time, by means of said electromagnetic acquisition means (27), an image from which a code univocally associated with said replacement format component to be mounted is extrapolated,
- performing a second control step, during which it is provided to verify whether said code detected by said electromagnetic acquisition means (27) coincides with a corresponding "expected" code of said replacement format component to be mounted, which has been previously stored in said processor (26);
- if the result of the second control step is positive, a step of guiding the operator during the installation of said replacement format component on said packaging machine (10) is performed by means of said portable electronic device (25) that graphically represents said operative information so as to make available to the operator the operative information relating to the assembly of the replacement format component on said packaging machine (10),
wherein said step of guiding the operator is made available to the operator only if the first and second control step detects a correspondence between said code and said "expected" code, therefore enabling the reproduction, by means of said portable electronic device (25), respectively of operative information relating to the disassembly of the format component on said packaging machine (10) and to the installation of said replacement format component on said packaging machine (10), while - in the absence of said correspondence - the method respectively inhibits the step of reproducing the operative information relating to the disassembly of the format component on said packaging machine (10) and to the installation of said replacement format component on said packaging machine (10).

2. Method as in claim 1, **characterized in that** said portable electronic device (25) is chosen from a group consisting of: a tablet, a smartphone, a phablet, a notepad, a laptop.

3. Method as in claim 1, **characterized in that** said portable electronic device (25) is configured as a viewing device wearable by an operator and comprising a reproduction mean (28) able to reproduce said data to make them visually available to the operator according to augmented reality techniques.

4. Method as in any claim hereinbefore, **characterized in that** it comprises before said step of detecting, by means of said electromagnetic acquisition means (27), an image from which the code univocally associated with the format component to be disassembled is extrapolated, a further step of locating, by means of said device (25) able to graphically represent said operative information, said format component installed on board a machine that is identified by said code.

5. Method as in any claim hereinbefore, **characterized in that** said step of detecting provides to detect in real time a code, in particular comprising a sequence of alphanumeric characters, which are univocally associated with specific format components of said packaging machine (10) and which are acquired by said electromagnetic acquisition means (27) through a recognition step using the OCR ("Optical Character Recognition") technique.

6. Method as in claim 5, **characterized in that** said recognition step is performed by said processor (26).

7. Method as in claim 5, **characterized in that** said recognition step is performed by another processing unit (33) integrated in said electromagnetic acquisition means (27) and configured to communicate the codes extrapolated to said processor (26) in order to perform said control step.

8. Method as in any claim hereinbefore, **characterized in that** said operative information comprises visual contents, in particular images, a sequence of images, a video, a text or a combination thereof, and/or sound contents, and/or multimedia contents formed by the combination of one or more of the contents listed above.

9. Method as in any claim hereinbefore, **characterized in that** said packaging machine is a blister packaging machine, and said product is a blister comprising one or more discrete items, in particular tablets, or pills, or capsules.

10. Apparatus to perform the method to assist an operator as in claim 1,
**characterized in that** it comprises a packaging machine (10) comprising a plurality of components disposed in one or more work stations (13, 16, 18, 20, 32) to perform respective workings on a product to be packaged, said programmable control unit (24) being configured at least to drive said components and to command the functioning of said work stations (13, 16, 18, 20, 32).

11. Processor-readable medium carrying program instructions performable by a processor in order to implement a method to assist an operator in performing a format-change intervention on a packaging machine (10) able to automatically perform a plurality of operations on a product to be packaged, said program instructions comprising the steps of the method according to claim 1.

12. Processor program able to be stored in a processor-readable medium, comprising instructions which, once performed by an apparatus as in claim 10, determine the performance of a method to assist an operator in performing a format-change intervention on a packaging machine (10) able to automatically perform a plurality of operations on a product to be packaged, said program instructions comprising the steps of the method according to claim 1.

## Patentansprüche

1. Verfahren zum Unterstützen eines Bedieners beim Durchführen eines Formatänderung-Eingriffs bei einer Verpackungsmaschine (10), die imstande ist, automatisch eine Mehrzahl von Vorgängen an einem zu verpackenden Produkt durchzuführen, bei welchem Eingriff es bereitgestellt wird, Formatkomponenten der Verpackungsmaschine (10) auszutauschen, die ausgetauscht werden müssen, weil sie eindeutig mit dem zu verpackenden Produkt korreliert sind, wobei das Verfahren dem Bediener eine tragbare elektronische Vorrichtung (25) zugänglich macht, wobei beim Start des Formatänderung-Eingriffs bei der Verpackungsmaschine (10) das Verfahren bereitstellt die Interaktion der tragbaren elektronischen Vorrichtung (25) mit einer die Verpackungsmaschine (10) steuernden, programmierbaren Steuereinheit (24), um dem Bediener Betriebsinformationen visuell zugänglich zu machen, die von der Verpackungsmaschine (10) ausgehend empfangen werden und die spezifisch sind, um den Bediener beim Durchführen des durchzuführenden Formatänderung-Eingriffs zu unterstützen, wobei die tragbare elektronische Vorrichtung (25) aufweist einen Prozessor (26), der konfiguriert ist, um Daten, die mit den Betriebsinformation korrelieren, zu speichern und zu verarbeiten, und aufweist oder betriebsverknüpft ist mit elektromagnetischen Erfassungsmitteln (27), wobei das Verfahren **dadurch gekennzeichnet ist, dass** es aufweist:
- Auswählen von einer Benutzerschnittstelle (23) ausgehend, die mit der programmierbaren Steuereinheit (24) verbunden ist, des Formats des Produkts, welches von der Verpackungsmaschine (10) verpackt werden muss,
- Verbinden der tragbaren elektronischen Vorrichtung (25) mit der programmierbaren Steuereinheit (24) via Kabel oder kabellos,
- Durchführen eines initialen Datenübertragungsschritts, während dessen die Betriebsinformationen, die mit dem durchzuführenden Formatänderung-Eingriff zusammenhängen, in den Prozessor (26) der tragbaren elektronischen Vorrichtung (25) heruntergeladen werden,
- Erfassen, mittels der elektronmagnetischen Erfassungsmittel (27), eines Bildes, aus welchem der Code, der eindeutig mit der auszubauenden Formatkomponente verknüpft ist, extrapoliert wird,
- Durchführen eines ersten Steuerschritts, während dessen es bereitgestellt wird, zu verifizieren, ob der Code, der von den elektromagnetischen Erfassungsmitteln (27) erfasst wurde, mit einem korrespondierenden "erwarteten" Code der Formatkomponente, der in dem Prozessor (26) vorab gespeichert wurde, übereinstimmt,
- falls das Ergebnis des ersten Steuerschritts positiv ist, Zugänglichmachen, dem Bediener, der Betriebsinformationen, die mit dem Ausbau der Formatkomponente bei der Verpackungsmaschine (10) zusammenhängen,
- einen Schritt des Lokalisierens, mittels der tragbaren elektronischen Vorrichtung (25), welche die Betriebsinformationen grafisch darstellt, einer einzubauenden Austausch-Formatkomponente, die von einer ersten Identifizier-Charakteristik identifiziert ist, die eindeutig mit der Austausch-Formatkomponente verknüpft ist, wobei Letztere in einem Komponentenlager (30) an einem von der Verpackungsmaschine (10) separaten Ort angeordnet ist,
- Erfassen in Echtzeit, mittels der elektromagnetischen Erfassungsmittel (27), eines Bildes, aus welchem ein Code extrapoliert wird, der eindeutig mit der einzubauenden Austausch-Formatkomponente verknüpft ist,
- Durchführen eines zweiten Steuerschritts, während dessen es bereitgestellt wird, zu verifizieren, ob der von den elektromagnetischen Erfassungsmitteln (27) erfasste Code mit einem korrespondierenden "erwarteten" Code der einzubauenden Austausch-Formatkomponente übereinstimmt, der vorab in dem Prozessor (26) gespeichert wurde,
- falls das Ergebnis des zweiten Steuerschritts positiv ist, ein Schritt des Führens des Bedieners während der Installation der Austausch-Formatkomponente bei der Verpackungsmaschine (10) mittels der tragbaren elektronischen Vorrichtung (25) durchgeführt wird, die die Betriebsinformationen grafisch darstellt, um dem Bediener die Betriebsinformationen, die mit dem Einbau der Austausch-Formatkomponente bei der Verpackungsmaschine (10) zusammenhängen, zugänglich zu machen,
wobei der Schritt des Führens des Bedieners dem Bediener nur zugänglich gemacht wird, wenn der erste und der zweite Steuerschritt eine Übereinstimmung zwischen dem Code und dem "erwarteten" Code erfassen, dadurch ermöglichend die Reproduktion, mittels der tragbaren elektronischen Vorrichtung (25), jeweils von Betriebsinformationen, die zusammenhängen mit dem Ausbau der Formatkomponente der Verpackungsmaschine (10) und mit der Installation der Austausch-Formatkomponente bei der Verpackungsmaschine (10), wobei - bei nicht vorliegender Übereinstimmung - das Verfahren entsprechend den Schritt des Reproduzierens der Betriebsinformationen, die zusammenhängen mit dem Ausbau der Formatkomponente bei der Verpackungsmaschine (10) und mit der Installation der Austausch-Formatkomponente bei der Verpackungsmaschine (10), unterbindet.

2. Verfahren gemäß Anspruch 1, **dadurch gekennzeichnet, dass** die tragbare elektronische Vorrichtung (25) ausgewählt ist aus einer Gruppe, die besteht aus: einem Tablet, einem Smartphone, einem Phablet, einem Notepad, einem Laptop.

3. Verfahren gemäß Anspruch 1, **dadurch gekennzeichnet, dass** die tragbare elektronische Vorrichtung (25) konfiguriert ist als eine Sehvorrichtung, die von einem Bediener getragen werden kann und die aufweist ein Reproduktionsmittel (28), das imstande ist, die Daten zu reproduzieren, um sie dem Bediener visuell zugänglich zu machen, gemäß erweiterter-Realität-Techniken.

4. Verfahren gemäß irgendeinem vorigen Anspruch, **dadurch gekennzeichnet, dass** es aufweist, vor dem Schritt des Erfassens, mittels der elektromagnetischen Erfassungsmittel (27), eines Bildes, aus welchem der Code extrapoliert wird, der eindeutig mit der auszubauenden Formatkomponente verknüpft ist, einen weiteren Schritt des Lokalisierens, mittels der Vorrichtung (25), die imstande ist, die Betriebsinformationen grafisch darzustellen, der an Bord einer Maschine installierten Formatkomponente, die von dem Code identifiziert ist.

5. Verfahren gemäß irgendeinem vorigen Anspruch, **dadurch gekennzeichnet, dass** der Schritt des Erfassens bereitstellt, einen Code in Echtzeit zu erfassen, der insbesondere eine Sequenz von alphanumerischen Zeichen aufweist, die eindeutig mit spezifischen Formatkomponenten der Verpackungsmaschine (10) verknüpft sind und die von den elektromagnetischen Erfassungsmitteln (27) erfasst werden durch einen Erkennungsschritt verwendend die OCR("Optische-Zeichen-Erkennung")-Technik.

6. Verfahren gemäß Anspruch 5, **dadurch gekennzeichnet, dass** der Erkennungsschritt von dem Prozessor (26) durchgeführt wird.

7. Verfahren gemäß Anspruch 5, **dadurch gekennzeichnet, dass** der Erkennungsschritt von einer anderen Prozesseinheit (33) durchgeführt wird, die in den elektromagnetischen Erfassungsmitteln (27) integriert ist und konfiguriert ist, um die extrapolierten Codes an den Prozessor (26) zu kommunizieren, um den Steuerschritt durchzuführen.

8. Verfahren gemäß irgendeinem vorigen Anspruch, **dadurch gekennzeichnet, dass** die Betriebsinformationen aufweisen visuelle Inhalte, insbesondere Bilder, eine Sequenz von Bildern, ein Video, einen Text oder eine Kombination hiervon, und/oder Toninhalte, und/oder Multimediainhalte, die von der Kombination von einem oder mehreren der oben gelisteten Inhalte gebildet sind.

9. Verfahren gemäß irgendeinem vorigen Anspruch, **dadurch gekennzeichnet, dass** die Verpackungsmaschine eine Blister-Verpackungsmaschine ist, und wobei das Produkt ein Blister ist, der einen oder mehrere diskrete Artikel, insbesondere Tabletten oder Pillen oder Kapseln, aufweist.

10. Vorrichtung zum Durchführen des Verfahrens zum Unterstützen eines Bedieners gemäß Anspruch 1, **dadurch gekennzeichnet, dass** sie aufweist eine Verpackungsmaschine (10), die aufweist eine Mehrzahl von Komponenten, die in einer oder mehreren Arbeitsstationen (13, 16, 18, 20, 32) angeordnet sind, um jeweilige Arbeiten an einem zu verpackenden Produkt durchzuführen, wobei die programmierbare Steuereinheit (24) zumindest konfiguriert ist, um die Komponenten anzutreiben und das Funktionieren der Arbeitsstationen (13, 16, 18, 20, 32) zu steuern.

11. Prozessorlesbares Medium, das Programminstruktionen trägt, die von einem Prozessor ausführbar sind, um ein Verfahren zum Unterstützen eines Bedieners beim Durchführen eines Formatänderung-Eingriffs bei einer Verpackungsmaschine (10) zu implementieren, die imstande ist, automatisch eine Mehrzahl an Vorgängen an einem zu verpackenden Produkt durchzuführen, wobei die Programminstruktionen aufweisen die Schritte des Verfahrens gemäß Anspruch 1.

12. Prozessorprogramm, das imstande ist, in einem prozessorlesbaren Medium gespeichert zu werden, aufweisend Instruktionen, die, sobald von einer Vorrichtung gemäß Anspruch 10 durchgeführt, die Durchführung eines Verfahrens zum Unterstützen eines Bedieners beim Durchführen eines Formatänderung-Eingriffs bei einer Verpackungsmaschine (10) anweisen, die imstande ist, automatisch eine Mehrzahl von **Vorgängen** an einem zu verpackenden Produkt durchzuführen, wobei die Programminstruktionen aufweisen die Schritte des Verfahrens gemäß Anspruch 1.

## Revendications

1. Procédé pour aider un opérateur à effectuer une intervention de changement de format sur une machine de conditionnement (10) capable d'effectuer automatiquement une pluralité d'opérations sur un produit à conditionner ; intervention dans laquelle il est prévu de remplacer des composants de format de ladite machine de conditionnement (10) qui doivent être remplacés parce qu'ils sont corrélés de manière univoque au produit à conditionner, ledit procédé mettant à la disposition de l'opérateur un dispositif électronique portable (25), dans lequel, au début de ladite intervention de changement de format sur ladite machine de conditionnement (10), le procédé permet l'interaction dudit dispositif électronique portable (25) avec une unité de commande programmable (24) qui commande ladite machine de conditionnement (10) afin de rendre visuellement disponibles pour l'opérateur des informations opérationnelles reçues de ladite machine de conditionnement (10) et spécifiques pour aider l'opérateur à effectuer l'intervention de changement de format à effectuer, ledit dispositif électronique portable (25) comprenant un processeur (26) configuré pour stocker et traiter des données corrélées auxdites informations opérationnelles et comprenant, ou étant associé de manière opérationnelle à, des moyens d'acquisition électromagnétiques (27) ; ledit procédé étant **caractérisé en ce qu'**il comprend les étapes consistant à :
- sélectionner, à partir d'une interface utilisateur (23) reliée à ladite unité de commande programmable, (24) le format du produit que ladite machine de conditionnement (10) va devoir conditionner,
- connecter ledit dispositif électronique portable (25) à ladite unité de commande programmable (24) par câble ou sans fil,
- effectuer une étape de transmission de données initiale au cours de laquelle les informations opérationnelles relatives à l'intervention de changement de format à effectuer sont téléchargées dans ledit processeur (26) dudit dispositif électronique portable (25),
- détecter, par l'intermédiaire desdits moyens d'acquisition électromagnétiques (27), une image à partir de laquelle le code associé de manière univoque au composant de format à démonter est extrapolé,
- mettre en oeuvre une première étape de commande, au cours de laquelle il est prévu de vérifier si ledit code détecté par lesdits moyens d'acquisition électromagnétiques (27) coïncide avec un code « attendu » correspondant dudit composant de format qui a été précédemment stocké dans ledit processeur (26) ;
- si le résultat de la première étape de commande est positif, mettre à la disposition de l'opérateur les informations opérationnelles relatives au démontage du composant de format sur ladite machine de conditionnement (10),
- une étape de localisation, par l'intermédiaire dudit dispositif électronique portable (25) qui représente graphiquement lesdites informations opérationnelles, d'un composant de format de remplacement à monter qui est identifié par une première caractéristique d'identification associée de manière univoque audit composant de format de remplacement, ce dernier étant situé dans un magasin de composants (30) dans un emplacement séparé de ladite machine de conditionnement (10) ;
- détecter en temps réel, par l'intermédiaire desdits moyens d'acquisition électromagnétiques (27), une image à partir de laquelle un code associé de manière univoque audit composant de format de remplacement à monter est extrapolé,
- effectuer une seconde étape de commande, au cours de laquelle il est prévu de vérifier si ledit code détecté par lesdits moyens d'acquisition électromagnétiques (27) coïncide avec un code « attendu » correspondant dudit composant de format de remplacement à monter, qui a été préalablement stocké dans ledit processeur (26) ;
- si le résultat de la seconde étape de commande est positif, une étape de guidage de l'opérateur lors de l'installation dudit composant de format de remplacement sur ladite machine de conditionnement (10) est réalisée par l'intermédiaire dudit dispositif électronique portable (25) qui représente graphiquement lesdites informations opérationnelles de manière à mettre à la disposition de l'opérateur les informations opérationnelles relatives à l'assemblage du composant de format de remplacement sur ladite machine de conditionnement (10),
dans lequel ladite étape de guidage de l'opérateur est mise à la disposition de l'opérateur uniquement si la première et la seconde étape de commande détectent une correspondance entre ledit code et ledit code « attendu », en permettant ainsi la reproduction, par l'intermédiaire dudit dispositif électronique portable (25), respectivement d'informations opérationnelles relatives au démontage du composant de format sur ladite machine de conditionnement (10) et à l'installation dudit composant de format de remplacement sur ladite machine de conditionnement (10), tandis que - en l'absence de ladite correspondance - le procédé inhibe respectivement l'étape de reproduction des informations opérationnelles relatives au démontage du composant de format sur ladite machine de conditionnement (10) et à l'installation dudit composant de format de remplacement sur ladite machine de conditionnement (10).

2. Procédé selon la revendication 1, **caractérisé en ce que** ledit dispositif électronique portable (25) est choisi dans un groupe comprenant : une tablette, un smartphone, une phablette, un bloc-notes, un ordinateur portable.

3. Procédé selon la revendication 1, **caractérisé en ce que** ledit dispositif électronique portable (25) est configuré sous la forme d'un dispositif de visualisation pouvant être porté par un opérateur et comprenant des moyens de reproduction (28) capables de reproduire lesdites données pour les rendre visuellement disponibles pour l'opérateur selon des techniques de réalité augmentée.

4. Procédé selon l'une quelconque des revendications précédentes, **caractérisé en ce qu'**il comprend, avant ladite étape de détection, par l'intermédiaire desdits moyens d'acquisition électromagnétiques (27), une image à partir de laquelle le code associé de manière univoque au composant de format à démonter est extrapolé, une étape supplémentaire de localisation, par l'intermédiaire dudit dispositif (25) capable de représenter graphiquement lesdites informations opérationnelles, dudit composant de format installé à bord d'une machine qui est identifiée par ledit code.

5. Procédé selon l'une quelconque des revendications précédentes, **caractérisé en ce que** ladite étape de détection permet de détecter en temps réel un code, comprenant en particulier une séquence de caractères alphanumériques, qui sont associés de manière univoque à des composants de format spécifiques de ladite machine de conditionnement (10) et qui sont acquis par lesdits moyens d'acquisition électromagnétiques (27) par le biais d'une étape de reconnaissance utilisant la technique OCR ("Reconnaissance optique de caractère").

6. Procédé selon la revendication 5, **caractérisé en ce que** ladite étape d'impression est effectuée par ledit processeur (26).

7. Procédé selon la revendication 5, **caractérisé en ce que** ladite étape de reconnaissance est réalisée par une autre unité de traitement (33) intégrée dans lesdits moyens d'acquisition électromagnétiques (27) et configurée pour communiquer les codes extrapolés audit processeur (26) afin de réaliser ladite étape de commande.

8. Procédé selon l'une quelconque des revendications précédentes, **caractérisé en ce que** lesdites informations opérationnelles comprennent des contenus visuels, en particulier des images, une séquence d'images, une vidéo, un texte ou une combinaison de ceux-ci, et/ou des contenus sonores, et/ou des contenus multimédias formés par la combinaison d'un ou de plusieurs des contenus énumérés ci-dessus.

9. Procédé selon l'une quelconque des revendications précédentes, **caractérisé en ce que** ladite machine de conditionnement est une machine de conditionnement sous emballage-coque, et ledit produit est un emballage-coque comprenant un ou plusieurs articles discrets, en particulier des comprimés, ou des pilules, ou des capsules.

10. Appareil pour mettre en oeuvre le procédé pour aider un opérateur selon la revendication 1, **caractérisé en ce qu'**il comprend une machine de conditionnement (10) comprenant une pluralité de composants disposés dans un ou plusieurs postes de travail (13, 16, 18, 20, 32) pour effectuer des travaux respectifs sur un produit à conditionner, ladite unité de commande programmable (24) étant configurée au moins pour entraîner lesdits composants et pour commander le fonctionnement desdits postes de travail (13, 16, 18, 20, 32).

11. Support lisible par processeur transportant des instructions de programme pouvant être exécutées par un processeur afin de mettre en oeuvre un procédé pour aider un opérateur à effectuer une intervention de changement de format sur une machine de conditionnement (10) capable d'effectuer automatiquement une pluralité d'opérations sur un produit à conditionner, lesdites instructions de programme comprenant les étapes du procédé selon la revendication 1.

12. Programme de processeur pouvant être stocké dans un support lisible par un processeur, comprenant des instructions qui, une fois exécutées par un appareil selon la revendication 10, déterminent la performance d'un procédé pour aider un opérateur à exécuter une intervention de changement de format sur une machine de conditionnement (10) capable d'exécuter automatiquement une pluralité d'opérations sur un produit à conditionner, lesdites instructions de programme comprenant les étapes du procédé selon la revendication 1.
